Europäisches Patentamt

European Patent Office

Office européen des brevets

(19)

(11) **EP 1 533 561 A1**

(12) **DEMANDE DE BREVET EUROPEEN**

(43) Date de publication:
**25.05.2005 Bulletin 2005/21**

(51) Int Cl.⁷: **F21V 7/22**, C08L 81/06, G02B 1/04

(21) Numéro de dépôt: **04292656.8**

(22) Date de dépôt: **09.11.2004**

(84) Etats contractants désignés:
**AT BE BG CH CY CZ DE DK EE ES FI FR GB GR HU IE IS IT LI LU MC NL PL PT RO SE SI SK TR**
Etats d'extension désignés:
**AL HR LT LV MK YU**

(30) Priorité: **14.11.2003 FR 0313372**

(71) Demandeur: **VALEO VISION**
**93012 Bobigny Cédex (FR)**

(72) Inventeurs:
• **Albou, Pierre**
  **75013 Paris (FR)**
• **Ortiz, José**
  **93260 les Lilas (FR)**

(74) Mandataire: **Renous Chan, Véronique**
**Valeo Vision,**
**34, rue Saint-André**
**93012 Bobigny Cedex (FR)**

(54) **Elément dioptrique pour dispositif d'éclairage et/ou de signalisation pour véhicule automobile**

(57) L'invention a pour objet un élément dioptrique pour dispositif d'éclairage et/ou de signalisation pour véhicule automobile, ledit élément étant en matériau polymère comprenant au moins un polymère à base de polysulfone(s).

**FIG.1**

# Description

La présente invention a pour objet un élément dioptrique destiné à équiper des dispositifs d'éclairage et/ou de signalisation, notamment du type projecteur, pour véhicule automobile. Elle s'intéresse notamment, mais pas uniquement, aux projecteurs connus sous le terme de projecteurs elliptiques. On comprend par projecteur elliptique un projecteur qui comprend une source lumineuse telle le filament d'une lampe à incandescence, un réflecteur en forme générale d'ellipsoïde au voisinage d'un premier foyer duquel est placée la source lumineuse, une lentille convergente dont un plan focal passe au voisinage du second foyer du réflecteur et est perpendiculaire à l'axe dudit réflecteur, ainsi qu'une glace de fermeture.

Dans ce type de projecteur notamment, la quantité de chaleur transmise à la lentille, plus particulièrement via le réflecteur réfléchissant le flux lumineux émis par la source, (éventuellement à travers différents mécanismes) est élevée, et elle peut porter la lentille à des températures de 130°C ou plus. C'est la raison pour laquelle on a recours généralement à des lentilles en matériau minéral, en verre, qui supportent sans détérioration des températures bien supérieures à celles que pourraient supporter des matériaux en polymère standard. Ainsi, le polycarbonate a une température de ramollissement proche des températures mentionnées plus haut, et il a tendance à jaunir de façon prononcée quand il est soumis à des températures égalant ou excédant environ 130 ou 140°C. Cependant, l'utilisation de lentilles en verre n'est pas dénuée d'inconvénients : les lentilles en verre sont nettement plus lourdes que des lentilles en matériau plastique remplissant la même fonction, on doit prévoir une structure porteuse plus lourde, plus volumineuse/plus résistante mécaniquement que celle qui serait nécessaire pour porter des lentilles en matériau plastique. Il s'agit notamment du support de la lentille, et de l'actionneur qui y est associé si la lentille est montée mobile dans le projecteur. C'est la raison pour laquelle des études ont été menées pour mettre au point des matériaux en polymère aptes à présenter une résistance thermique accrue, tout en conservant les propriétés optiques requises. Il est ainsi connu du brevet FR 2 799 267 des lentilles à base de polyméthacrylméthylimide (PMMI) ou à base de copolymères de cyclo-oléfines. Cependant, ces matériaux ne présentent pas encore la résistante thermique suffisante, notamment pour certaines applications. L'invention a donc pour but d'améliorer ces solutions existantes, en cherchant de nouveaux matériaux polymère pour fabriquer des lentilles qui puissent résister sans détérioration à des températures d'utilisation élevées, notamment d'au moins 140°C, tout en ayant les propriétés optiques demandées dans le domaine de l'éclairage ou de la signalisation de véhicules automobile, notamment une haute transparence. Subsidiairement, l'invention cherche également à pouvoir fabriquer de telles lentilles dans des conditions les plus satisfaisantes possibles à l'échelle industrielle.

L'invention a tout d'abord pour objet un élément dioptrique pour dispositif d'éclairage et/ou de signalisation pour véhicule automobile, ledit élément étant en matériau polymère comprenant au moins un polymère à base de polysulfone(s). Avantageusement, il est majoritairement, de préférence essentiellement, à base de polysulfone(s). Il s'agit d'un polymère appartenant à la famille des polymères thermoplastiques. Ce type de polymères n'a jusque là jamais été envisagé dans des applications optiques dans le domaine intéressant l'invention, notamment parce qu'il pouvait présenter une couleur résiduelle dans les jaunes pouvant apparaître comme rédhibitoire pour les épaisseurs habituelles de lentille simple ou de lentille de Fresnel utilisée jusque là dans les projecteurs automobile. Or de grands progrès ont été faits à ce sujet, et les inventeurs ont réalisé que ce matériau présentait par ailleurs toute une série de caractéristiques très avantageuses, cette question de couleur résiduelle pouvant être surmontée, comme détaillé plus en avant.

De préférence, l'élément dioptrique selon l'invention est une lentille, par exemple une lentille de type lentille de Fresnel et/ou une lentille utilisée dans les modules elliptiques de projecteur.

Avantageusement, l'élément dioptrique selon l'invention utilise un polymère poly sulfone ayant une masse moléculaire d'au plus 40 000, et notamment comprise entre 20 000 et 40 000, par exemple entre25 000 et 35 000. Cette gamme est en effet particulièrement appropriée pour une technique de moulage du type injection.

Avantageusement, l'élément dioptrique selon l'invention a une épaisseur d'au moins 1 mm, notamment comprise entre 1 et 20 mm. On entend par « « épaisseur » au sens de l'invention l'épaisseur maximale de la lentille, notamment en son centre. L'invention a ainsi découvert que les poly sulfones pouvaient être utilisés avec succès pour des épaisseurs de lentille très significatives.

Avantageusement, l'élément dioptrique selon l'invention a est massif. On comprend par là au sens de l'invention qu'il est homogène, constitué d'un seul type de matériau(x) sur toute son épaisseur. On permet ainsi une fabrication par moulage en une seule étape.

L'élément dioptrique selon l'invention présente de préférence une température de déformation sous charge à 1,8 MPa comprise entre 170 et 185°, notamment entre 175 et 180 °C, par exemple d'environ 178°C. Cette température est mesurée conformément à la norme ASTM D648, elle est également connue sous l'abréviation anglaise HDTA. C'est là l'avantage le plus important des polymères à base de polysulfone : ils sont particulièrement résistants à la chaleur, la température de déformation sous charge en étant un indicateur utilisé fréquemment dans le domaine des matériaux plastiques. Ils ont une haute résistance au fluage à haute température, une température de transition vitreuse élevée, d'au moins 180°C, notamment comprise entre 180 et 190°C, notamment d'environ 185°C. Leur température d'utilisation en continu dans un projecteur peut alors atteindre 150°C, et même 160 ou 170°C au moins pour de courtes périodes d'utilisation.

L'élément dioptrique selon l'invention présente de préférence une transmission lumineuse d'au moins 75% pour une épaisseur de 2,5 mm. Ce niveau de transparence est approprié pour les applications envisagées.

Il présente également de préférence un indice de réfraction d'au moins 1,6, notamment d'au plus 1,7, de préférence compris entre 1,62 et 1,65. Cet indice de réfraction élevé des polysulfones est un atout important également : il est à comparer, par exemple, à celui des lentilles en polycarbonates d'environ 1,56, à celui de lentilles en verre de 1,52 ou à celui de lentilles en PMMI de 1,51. Compte tenu de l'indice de réfraction élevé des polysulfones, on peut, à nombre d'anneaux identiques et à épaisseurs minimum égales, diminuer l'épaisseur totale d'une lentille de Fresnel à base de polysulfone(s) d'environ 15% par rapport à une lentille en PMMI ou en verre. Cette diminution permet ainsi de réduire la longueur du trajet des rayons lumineux dans l'épaisseur de la lentille d'environ 30%. La profondeur des dents est alors réduite d'autant, ce qui facilite la réalisation du moule de formage et son remplissage. Inversement, si on choisit de conserver identique l'épaisseur de la lentille en passant d'un matériau à base de PMMI à un matériau à base de polysulfone(s), on peut diminuer le nombre des anneaux, donc simplifier l'outillage nécessaire au formage de la lentille et limiter davantage les risques d'éblouissement dus aux liaisons entre anneaux. On peut même envisager de remplacer une lentille de Fresnel par une lentille classique sans anneau : puisque toutes choses égales par ailleurs, on peut grâce à cet indice de réfraction élevé, obtenir un niveau de performance optique plus élevé à épaisseur égale, on peut également abandonner les anneaux de la lentille de Fresnel en ajustant au besoin l'épaisseur de la lentille, mais sans perte significative de performance optique ni augmentation trop importante de l'épaisseur de la lentille. Or, du point de vue style, il est effectivement intéressant de pouvoir le cas échéant supprimer les lentilles de Fresnel des projecteurs automobile.

L'élément dioptrique selon l'invention présente un indice de jaune d'au plus 2,5, notamment d'au plus 2,2 pour une épaisseur de 2,5 mm. La couleur résiduelle des polysulfones a en effet atteint des niveaux acceptables pour les applications optiques du domaine de l'invention, en choisissant de préférence les polysulfones récemment mis au point par les chimistes et de qualité « crystal clear ». Cet effet de coloration jaune est d'autant plus atténué que, comme mentionné plus haut, on peut se permettre de diminuer l'épaisseur de la lentille et, de fait, diminuer la longueur du trajet des rayons lumineux à travers la lentille.

Avantageusement, les éléments dioptriques se prêtent à un formage par injection de façon tout à fait satisfaisante. Comme vu plus haut, on peut réaliser par injection des lentilles de Fresnel avec des moules plus simples (moins d'anneaux à réaliser) et/ avec moins de matières premières (lentilles plus minces), à performances optiques des lentilles égales.

Les éléments dioptriques selon l'invention sont bien moins épaisses et lourdes que des lentilles en verre de performances optiques identiques (un gain de poids d'au moins 50%), mais elles peuvent être encore moins lourdes que les éléments dioptriques en polymère usuel utilisés actuellement. C'est la raison pour laquelle ils peuvent être maintenus en position dans le projecteur par une structure mécanique relativement légère, et on peut même remplacer les pièces support usuelles en métal du type aluminium par des pièces elles aussi en matériau de type polymère/plastique. C'est un avantage important, également dans le contexte des législations ou projets de législation concernant le « choc piéton », c'est-à-dire les législations destinées à promouvoir des projecteurs capables de préserver au mieux l'intégrité corporelle des piétons en cas de choc avec un véhicule en mouvement.

Avantageusement, on peut alors prévoir que l'élément dioptrique fasse partie intégrante de son support et/ou d'autres éléments dioptriques présents dans le projecteur. Le formage de l'ensemble peut se faire ainsi, notamment par injection, en une seule étape.

Au cas où l'élément dioptrique devait être soumis à un échauffement particulièrement élevé, on peut, pour parer au risque de détérioration de la lentille par échauffement excessif, intercaler entre la source de chaleur (ou au moins une d'entre elles s'il y en a plusieurs dans le dispositif d'éclairage), c'est-à-dire la source lumineuse, et l'élément dioptrique selon l'invention un écran thermique dans le dispositif d'éclairage. Ce dispositif d'éclairage comprend usuellement un boîtier fermé par une glace, ledit boîtier étant muni d'un réflecteur associé à au moins une source lumineuse. Cet écran thermique peut aussi être qualifié, au sens de l'invention, de radiateur, en ce sens qu'il est capable, notamment, d'absorber et/ou de rayonner la chaleur qu'il reçoit. Cet écran ou radiateur est de préférence totalement ou essentiellement « neutre » optiquement, son rôle se bornant à limiter les apports de chaleur à la lentille. On combine donc l'utilisation d'une pièce optique à forte valeur ajoutée, la lentille en polymère, à un écran thermique qui, lui, est de préférence choisi de conception et de matériau constitutif aussi simples et peu onéreux que possible, à partir du moment où il peut freiner significativement cet apport en chaleur. Il est de préférence essentiellement transparent et minéral, notamment à base de verre transparent, par exemple en verre de type silico-sodo-calcique, trempé ou non trempé. On peut fixer l'élément dioptrique et son écran thermique sur une même structure porteuse. Avantageusement, l'écran thermique est disposé en regard dudit élément dioptrique et a des dimensions suffisantes pour intercepter la plus grande partie du flux lumineux, voire l'essentiel ou la totalité du flux lumineux. Avantageusement, l'écran thermique fait face à l'élément optique sans contact avec lui. On crée ainsi une zone intermédiaire libre entre les deux éléments, favorisant la limitation de la transmission de la chaleur, notamment en créant un effet de convection d'air dans cette zone, en limitant une transmission de chaleur par conduction et en réduisant le rayonnement du radiateur vers la lentille. On trouvera plus de détails sur ces écrans thermiques dans la demande de brevet français FR 03-12117 déposée le 16 octobre 2003.

Alternativement ou cumulativement à l'utilisation de cet écran thermique, pour éviter que la lentille ne se dégrade par échauffement excessif, notamment dans le cas d'une utilisation en continu, il est possible d'appliquer sur la lentille soit un vernis de protection transparent soit un traitement de métallisation sous vide d'un dépôt relativement transparent. Ce type de traitement pourra être effectué au moins sur l'un des deux cotés, de préférence le plus chaud. Pour une lentille de Fresnel, il sera ainsi approprié de protéger par un vernis la face tournée vers la source de lumière, qui est la surface lisse de la lentille. Un dépôt sur la face opposée, munie de dents, est plus difficile à réaliser, car il risque d'entraîner des accumulations de vernis, lors de son dépôt, au niveau desdites dents, et de modifier le relief des dents, donc de perturber ses propriétés optiques. Dans le cas d'une lentille massive, avec une face lisse et une face bombée, on peut prévoir un dépôt de vernis sur les deux faces de la lentille. Les vernis protecteur sont par exemple choisis dans la famille des acryliques, et permettent en fait d'empêcher, de retarder l'oxydation à chaud de la lentille. Ils peuvent aussi avoir une fonction anti-reflets, et permettre d'augmenter la transmission lumineuse de la lentille. Ce vernis protecteur et/ou ce traitement de métallisation est applicable pour toutes lentilles en matériau plastique, non seulement pour celles en polysulfones, mais également, par exemple, celles en polycarbonate.

Il est également à noter que l'invention permet d'explorer de nouvelles voies d'utilisation de projecteurs: les projecteurs dits intelligents, à fonction du type code virage ou toute autre fonction de type AFS (abréviation anglo-saxonne pour Advanced Front Lighting System) nécessitant de rendre mobile un certain nombre d'éléments dans le projecteur, tout particulièrement le réflecteur et tous les éléments qui peuvent lui être mécaniquement solidaires. Avec l'invention autorisant un gain de poids (et de volume) considérable concernant la lentille, il devient possible d'obtenir les mêmes fonctions en rendant mobile non pas le réflecteur et ses éléments associés, mais seulement la lentille, associée ou non dans ses mouvements à son écran thermique s'il est rendu nécessaire, à l'aide de moteurs de taille plus compacte et de puissance raisonnable.

L'invention a également pour objet le véhicule muni d'un tel dispositif.

L'invention sera détaillée ci-après avec un exemple non limitatif illustré à l'aide des figures suivantes :

- **fig.1 :** une représentation obtenue par calcul numérique d'une lentille de Fresnel selon l'invention
- **fig. 2 :** une représentation du profil des anneaux (ou « dents ») de deux lentilles selon la figure 1, en comparaison avec le profil d'une lentille en polymère connu.

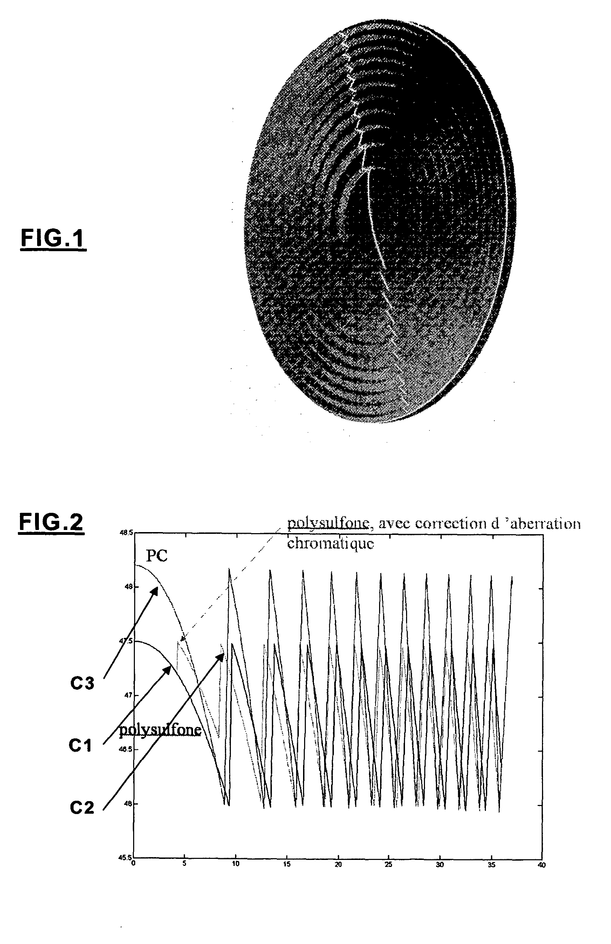

La lentille représentée en figure 1 est une lentille de Fresnel en polysulfone. Le polymère est disponible sous la référence UDEL P-3700 HC resin auprès de la société Solvay Advanced Polymers. Sa transmission lumineuse est comprise entre 77 et 83% pour une épaisseur de 2,5 mm, son indice de jaune est de 2%, son flou est de 2%, son indice de réfraction est de 1,635 en, sa température de transition vitreuse est de 185°C, son coefficient de dilatation thermique est de 56 ppm/°C ; sa température de déformation sous charge est de 178°C sous une pression de 1,8 MPa.

Cette lentille a été obtenue par injection et présente les caractéristiques dimensionnelles suivantes : épaisseur entre 2 et 3,4 mm, diamètre 70 mm, nombre d'anneaux :14 pour la lentille n°1, 15 pour la lentille n°2 . Elle est stigmatique entre son foyer et l'infini.

Afin de prendre en compte la couleur résiduelle du matériau de la lentille, des ajustements ont été faits dans le dimensionnement des anneaux, comme cela est montré dans la figure 2. Cette figure 2 (échelle orthogonale, mais non normée) représente tout d'abord la courbe C1 des sections d'une lentille n°1 selon l'invention en polysulfone et, à titre de comparaison, la courbe C3 d'une lentille de même diamètre et de mêmes propriétés optiques mais en polycarbonate (PC). Cette lentille en PC présente une épaisseur comprise entre 2 et 4 mm, et est dimensionnée de façon à présenter sensiblement les mêmes propriétés optiques, toutes choses égales par ailleurs, que la lentille n° 1. La lentille n° 2 en polysulfone selon l'invention a été réalisée, afin d'apporter une correction de chromatisme à la lentille n°1, déjà satisfaisante optiquement: la courbe correspondant à cette lentille n°2 est la courbe C2 de la figure 2. On note que la lentille n° 2 a un anneau supplémentaire par rapport à la lentille n° 1. La lentille n°2 a une coloration résiduelle qui n'est pas du tout décelable par rapport à celle de la lentille en PC, et encore plus faible que celle de la lentille n° 1. Ces ajustements ont été faits pour les raisons suivantes : les polysulfones ont une constringence faible, par rapport à celle du polycarbonate par exemple (égale à 23, à comparer à celle du polycarbonate qui est supérieure à 30). On rappelle que la constringence (aussi appelée indice de Abbe) est définie de la façon suivante :

$$n \text{ (jaune) - 1 / } n\text{(bleu) - } n \text{ (rouge)}$$

avec n les longueurs d'onde suivantes : pour le bleu la raie F à 486,1 nm, pour le jaune la raie D à 589,3 nm, pour le rouge la raie C à 656,3 nm.

Si on utilise ce type de lentille en polysulfone dans un module elliptique de projecteur, sa constringence faible peut conduire à une coloration non souhaitée de la coupure. (On rappelle que la coupure est la ligne séparant la lumière de l'obscurité pour un flux lumineux de type feu de code obtenu à l'aide d'un module elliptique associé à un cache approprié, de façon connue dans le domaine de l'éclairage automobile). Selon l'invention, on peut parer à cet inconvénient éventuel en choisissant, lors du calcul de chaque anneau, la longueur d'onde pour laquelle il sera rigoureusement stigmatique par rapport à un foyer commun, par lequel passera avantageusement le cache. En faisant varier cette longueur d'onde suivant l'anneau considéré entre le rouge et le bleu, chaque anneau aura tendance à donner une coloration différente à la coupure, et le choix judicieux des longueurs d'onde permet de se rapprocher d'une teinte neutre par synthèse additive. De préférence, on prendra également en compte le fait que la répartition d'énergie sur les différents anneaux pour une direction donnée dans le faisceau lumineux peut varier assez sensiblement : on préfère alors éviter qu'un seul anneau soit prépondérant. Pou ce faire, on peut imposer une densité minimale d'anneaux (y compris au centre), de façon à ce que, par zone macroscopique de la lentille, passent toujours plusieurs anneaux calculés pour des longueurs d'onde différentes.

Pour vérifier que la lentille selon l'invention ne se colorait pas davantage après utilisation à haute température, elle a été placée dans une étuve à 160°C pendant 1 semaine : l'évolution de l'indice de jaune est quasiment imperceptible, et sa transmission lumineuse reste quasiment inchangée.

## Revendications

1. Elément dioptrique pour dispositif d'éclairage et/ou de signalisation pour véhicule automobile, **caractérisé en ce que** ledit élément est en matériau polymère comprenant au moins un polymère à base de polysulfone(s).

2. Elément dioptrique selon la revendication 1, **caractérisé en ce qu'**il est majoritairement, de préférence essentiellement, à base de polysulfone(s).

3. Elément dioptrique selon l'une des revendications précédentes, **caractérisé en ce que** le polymère polysulfone a une masse moléculaire d'au plus 40 000, et notamment comprise entre 20 000 et 40 000.

4. Elément dioptrique selon l'une des revendications précédentes, **caractérisé en ce que** l'élément dioptrique a une épaisseur d'au moins 1 mm, notamment comprise entre 1 et 20 mm.

5. Elément dioptrique selon l'une des revendications précédentes, **caractérisé en ce que** l'élément dioptrique est massif.

6. Elément dioptrique selon l'une des revendications précédentes, **caractérisé en ce qu'**il est une lentille, par exemple une lentille de type lentille de Fresnel et/ou une lentille utilisée dans les modules elliptiques de projecteur.

7. Elément dioptrique selon l'une des revendications précédentes **caractérisé en ce qu'**il présente une température de déformation sous charge à 1,8 MPa comprise entre 170 et 185°.

8. Elément dioptrique selon l'une des revendications précédentes, **caractérisé en ce qu'**il présente une transmission lumineuse d'au moins 75% pour une épaisseur de 2,5 mm.

9. Elément dioptrique selon l'une des revendications précédentes, **caractérisé en ce qu'**il présente un indice de réfraction d'au moins 1,6, notamment d'au plus 1,7, de préférence compris entre 1,62 et 1,65.

10. Elément dioptrique selon l'une des revendications précédentes, **caractérisé en ce qu'**il présente un indice de jaune d'au plus 2,5, notamment d'au plus 2,2 pour une épaisseur de 2,5 mm.

11. Elément dioptrique selon l'une des revendications précédentes, **caractérisé en ce qu'**il est formé par une technique d'injection.

12. Elément dioptrique selon l'une des revendications précédentes, **caractérisé en ce qu'**il fait partie intégrante de son support et/ou d'autres éléments dioptriques, notamment par formage de l'ensemble en une seule étape, de préférence par une technique d'injection.

13. Elément dioptrique selon l'une des revendications précédentes, **caractérisé en ce qu'**il est constitué d'une lentille de Fresnel, et **en ce que** la longueur d'onde de chaque anneau est choisie de façon à ce qu'il soit stigmatique par rapport à un foyer commun.

14. Elément dioptrique selon la revendication 13, **caractérisé en ce que** les longueurs d'onde choisies pour les anneaux conduisent à une teinte neutre de la lentille par synthèse additive.

15. Elément dioptrique selon la revendication 13 ou 14, **caractérisé en ce que**, par toute zone macroscopique de la lentille, passent plusieurs anneaux ayant des longueurs d'onde différentes.

16. Elément dioptrique selon l'une des revendications précédentes, **caractérisé en ce qu'**il est muni sur au moins une de ses faces d'un vernis protecteur ou d'un traitement de métallisation.

17. Dispositif d'éclairage et/ou de signalisation pour véhicule automobile, comprenant au moins un boîtier fermé par une glace et muni d'au moins un réflecteur associé à au moins une source lumineuse, **caractérisé en ce que** ledit dispositif est muni d'au moins un élément dioptrique selon l'une des revendications précédentes.

## FIG.1

## FIG.2

polysulfone, avec correction d'aberration chromatique

PC

C3

C1

polysulfone

C2

**EP 1 533 561 A1**

Office européen
des brevets

**RAPPORT DE RECHERCHE EUROPEENNE**

Numéro de la demande

EP 04 29 2656

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 210 841 A (VINCENT  VODICKA)<br>1 juillet 1980 (1980-07-01)<br>* colonne 2, ligne 50 - ligne 62 *<br>* revendications 1,3 *<br>-----  | 1,2,4-7 | F21V7/22<br>C08L81/06<br>G02B1/04 |
| X | EP 0 400 287 A (BASF AG)<br>5 décembre 1990 (1990-12-05)<br>* revendications 1-4 *<br>-----  | 1,2 | |
| X | PATENT ABSTRACTS OF JAPAN<br>vol. 2003, no. 12,<br>5 décembre 2003 (2003-12-05)<br>& JP 2003 266530 A (SUMITOMO BAKELITE CO<br>LTD), 24 septembre 2003 (2003-09-24)<br>* abrégé *<br>-----  | 1,2 | |
| X | PATENT ABSTRACTS OF JAPAN<br>vol. 2000, no. 06,<br>22 septembre 2000 (2000-09-22)<br>& JP 2000 075112 A (MATSUSHITA ELECTRIC<br>WORKS LTD), 14 mars 2000 (2000-03-14)<br>* abrégé *<br>-----  | 1,2 | |
| X | US 5 916 649 A (HEGEMANN KLAUS  ET AL)<br>29 juin 1999 (1999-06-29)<br>* revendications 1-10 *<br>* colonne 4, ligne 3 - ligne 4 *<br>-----  | 1,2 | DOMAINES TECHNIQUES RECHERCHES (Int.Cl.7)<br><br>G02B<br>F21V<br>C08L<br>C08G |
| A | US 3 972 593 A (APPELDORN ROGER H ET AL)<br>3 août 1976 (1976-08-03)<br>* revendication 1 *<br>* colonne 5, ligne 67 *<br>-----  | 1 | |
| A | EP 0 845 501 B (SUMITOMO CHEMICAL CO)<br>3 juin 1998 (1998-06-03)<br>* revendication 1 *<br>* page 5, alinéa 37 - page 6 *<br>-----  | 1 | |

Le présent rapport a été établi pour toutes les revendications

| Lieu de la recherche | Date d'achèvement de la recherche | Examinateur |
|---|---|---|
| La Haye | 16 février 2005 | Depijper, R |

CATEGORIE DES DOCUMENTS CITES

X : particulièrement pertinent à lui seul
Y : particulièrement pertinent en combinaison  avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document  correspondant

EPO FORM 1503 03.82 (P04C02)

8

**EP 1 533 561 A1**

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

16-02-2005

| Document brevet cité au rapport de recherche | | Date de publication | Membre(s) de la famille de brevet(s) | | Date de publication |
|---|---|---|---|---|---|
| US 4210841 | A | 01-07-1980 | BR | 7902361 A | 23-10-1979 |
| | | | DE | 2915001 A1 | 18-10-1979 |
| | | | FR | 2423715 A1 | 16-11-1979 |
| | | | JP | 1172380 C | 17-10-1983 |
| | | | JP | 54137881 A | 25-10-1979 |
| | | | JP | 58000825 B | 08-01-1983 |
| | | | KR | 8200527 A | 12-04-1982 |
| | | | NL | 7902776 A | 19-10-1979 |
| EP 0400287 | A | 05-12-1990 | DE | 3909487 A1 | 27-09-1990 |
| | | | EP | 0400287 A2 | 05-12-1990 |
| | | | JP | 2281502 A | 19-11-1990 |
| JP 2003266530 | A | 24-09-2003 | AUCUN | | |
| JP 2000075112 | A | 14-03-2000 | AUCUN | | |
| US 5916649 | A | 29-06-1999 | DE | 4401813 A1 | 27-07-1995 |
| | | | AU | 1386995 A | 08-08-1995 |
| | | | BR | 9506555 A | 28-10-1997 |
| | | | CZ | 9602072 A3 | 12-03-1997 |
| | | | DE | 59504066 D1 | 03-12-1998 |
| | | | WO | 9520129 A1 | 27-07-1995 |
| | | | EP | 0740758 A1 | 06-11-1996 |
| | | | ES | 2123946 T3 | 16-01-1999 |
| | | | JP | 9508077 T | 19-08-1997 |
| | | | SI | 740758 T1 | 28-02-1999 |
| US 3972593 | A | 03-08-1976 | US | 4082433 A | 04-04-1978 |
| EP 0845501 | B | 03-06-1998 | JP | 10287810 A | 27-10-1998 |
| | | | JP | 11096817 A | 09-04-1999 |
| | | | DE | 69720378 D1 | 08-05-2003 |
| | | | DE | 69720378 T2 | 12-02-2004 |
| | | | EP | 0845501 A1 | 03-06-1998 |
| | | | JP | 10212403 A | 11-08-1998 |
| | | | TW | 454029 B | 11-09-2001 |
| | | | US | 5910560 A | 08-06-1999 |

EPO FORM P0460

Pour tout renseignement concernant cette annexe : voir Journal Officiel de l'Office européen des brevets, No.12/82